# FASCICULE DE BREVET EUROPEEN

(11) **EP 3 036 467 B1**
(45) Date de publication et mention de la délivrance du brevet: **01.08.2018**
(21) Numéro de dépôt: 15703619.5
(22) Date de dépôt: 11.02.2015
(51) Int. Cl.: F16L 11/08, F16L 55/04

(54) **CONDUITE FLEXIBLE DE TRANSPORT DE FLUIDE ET PROCÉDÉ ASSOCIÉ**
BIEGSAMES ROHR FÜR DEN TRANSPORT VON FLÜSSIGKEITEN UND ZUGEHÖRIGES VERFAHREN
FLEXIBLE PIPE FOR TRANSPORTING FLUID AND ASSOCIATED METHOD

(30) Priorité: 11.02.2014 FR 1451051
(43) Date de publication de la demande: 29.06.2016
(73) Titulaire: Technip France, 92400 Courbevoie (FR)
(72) Inventeur: SECHER, Philippe, 76250 Deville les Rouen (FR); JUNG, Patrice, 46389 Turis (Altury) (ES)
(74) Mandataire: Lavoix
(86) Numéro de dépôt international: PCT/EP2015/052896
(87) Numéro de publication internationale: WO 2015/121316

(56) Documents cités:
- WO-A1-01/81810
- WO-A1-92/02751
- WO-A1-2004/005785
- WO-A1-2011/050810
- WO-A1-2014/000816
- WO-A1-2014/167346
- FR-A1- 2 856 131
- US-A- 846 996

## Description

La présente invention concerne une conduite flexible de transport de fluide, selon le préambule de la revendication 1.

La conduite est de préférence une conduite flexible de type non liée (« unbonded » en anglais), destinée au transport d'hydrocarbures à travers une étendue d'eau, tel qu'un océan, une mer, un lac ou une rivière.

Une telle conduite flexible est par exemple réalisée suivant les documents normatifs API 17J (Spécification for Unbonded Flexible Pipe) et API RP 17B (Recommended Practice for Flexible Pipe) établis par l'American Petroleum Institute.

La conduite est généralement formée d'un ensemble de couches concentriques et superposées. Elle est considérée comme « non liée » au sens de la présente invention dès lors qu'au moins une des couches de la conduite est apte à se déplacer longitudinalement par rapport aux couches adjacentes lors d'une flexion de la conduite. En particulier, une conduite non liée est une conduite dépourvue de matériaux liants raccordant des couches formant la conduite.

La conduite est généralement disposée à travers une étendue d'eau, entre un ensemble de fond, destiné à recueillir le fluide exploité dans le fond de l'étendue d'eau et un ensemble de surface flottant ou fixe, destiné à collecter et à distribuer le fluide. L'ensemble de surface peut être une plateforme semi-submersible, un FPSO ou un autre ensemble flottant.

Dans certains cas, la conduite flexible comprend une carcasse interne disposée dans la gaine de pression, afin d'éviter l'écrasement de la gaine de pression, sous l'effet de la pression externe, par exemple lors d'une dépressurisation du passage interne de circulation de fluide délimité par la gaine de pression.

La carcasse interne est généralement formée d'un feuillard métallique profilé, enroulé en spirale. Les spires du feuillard sont agrafées les unes aux autres. Les spires délimitent entre elles un interstice hélicoïdal débouchant radialement vers l'intérieur dans le passage central de circulation du fluide.

La surface interne de la carcasse présente donc axialement une succession de creux et de bosses. La conduite est alors généralement qualifiée par le terme anglais « rough bore ».

Dans certains cas, la circulation du fluide le long de la carcasse est perturbée par les reliefs définis sur la carcasse par l'interstice hélicoïdal.

Cette perturbation de l'écoulement est parfois considérée comme l'origine de phénomènes de vibrations au sein de la conduite flexible, voire, lorsqu'une résonance est atteinte, de pulsations induites par la circulation de fluide (« flow induced pulsations » ou « singing » en anglais).

Pour pallier ce problème, il est connu de fabriquer des conduites flexibles dépourvues de carcasse interne et présentant donc une surface lisse (« smooth bore » en anglais).

Une autre solution à ce problème est décrite dans WO 2014/000816. Dans ce document, la conduite flexible comprend une carcasse dans laquelle un insert hélicoïdal de section en forme de T est coincé dans l'interstice présent entre les différentes spires de la carcasse. L'insert bouche l'interstice vers l'intérieur.

Le profil en forme de T est fabriqué à partir de deux feuilles planes, par exemple par soudure entre les feuilles.

La fabrication d'un tel insert, et sa disposition dans la carcasse est donc très difficile à mettre en oeuvre industriellement.

En particulier, l'assemblage par soudure de deux feuillards nécessite de mettre en oeuvre des équipements importants en ligne, tels que des dérouleurs, un assembleur, un poste de soudure laser, etc.

En variante, le profil en forme de T pourrait être fabriqué en amont de la production de la carcasse et peut être stocké sur un touret. Cependant, le stockage du profil en forme de T sur un touret engendre certains problèmes.

En premier lieu, la forme du profil en rend son stockage et son déroulage difficile, notamment en raison du risque de « cravate ».

Par ailleurs, il est nécessaire de disposer d'un stock important de tourets, ce qui augmente les coûts, complique la manutention, et nécessite une grande surface de stockage.

Il faut prévoir également une soudeuse spécifique lors des rechargements et de l'arasement du profil.

WO0181810 décrit une voûte de pression agrafée munie d'un insert destiné à empêcher le fluage de la gaine de pression.

WO9202751 décrit une méthode de fabrication d'une voûte agrafée par pliage.

Un but de l'invention est donc de fournir une conduite dans lequel le risque de vibrations, voire de pulsations est limité, et qui soit néanmoins simple et économique à fabriquer à l'échelle industrielle.

À cet effet, l'invention a pour objet une conduite selon larevendication 1.

La conduite selon l'invention peut comprendre l'une ou plusieurs des caractéristiques des revendications 2 à 9, prise(s) isolément ou suivant toute combinaison techniquement possible.

L'invention a aussi pour objet un procédé de fabrication selon la revendication 10.

Le procédé selon l'invention peut comprendre l'une ou plusieurs des caractéristiques des revendications 11 à 15, prise(s) isolément ou suivant toute combinaison techniquement possible.

L'invention sera mieux comprise, à la lecture de la description qui va suivre, donnée uniquement à titre d'exemple, et faite en se référant aux dessins annexés, sur lesquels :
- la figure 1 est une vue en perspective partiellement écorchée d'un tronçon central d'une première conduite flexible selon l'invention ;
- la figure 2 est une vue partielle, prise en coupe suivant un plan axial médian, d'un détail de la conduite de la figure 1 illustrant la carcasse et l'insert disposé dans l'interstice de la carcasse ;
- la figure 3 est une vue d'un détail de la figure 2, illustrant le profil de l'insert;
- la figure 4 est une vue schématique en bout d'un poste de fabrication et de pose de la carcasse et de l'insert ;
- la figure 5 est une vue schématique en coupe partielle suivant le plan axial V de la figure 4 ;
- la figure 6 est une vue illustrant les opérations réalisées par la profileuse d'insert pour la mise en forme de l'insert ;
- les figures 7, 8 et 9 illustrent des variantes d'inserts disposés dans des conduites selon l'invention.

Dans tout ce qui suit, les termes « extérieur » et « intérieur » s'entendent généralement de manière radiale par rapport à un axe A-A' de la conduite, le terme « extérieur » s'entendant comme relativement plus éloigné radialement de l'axe A-A' et le terme « intérieur » s'étendant comme relativement plus proche radialement de l'axe A-A' de la conduite.

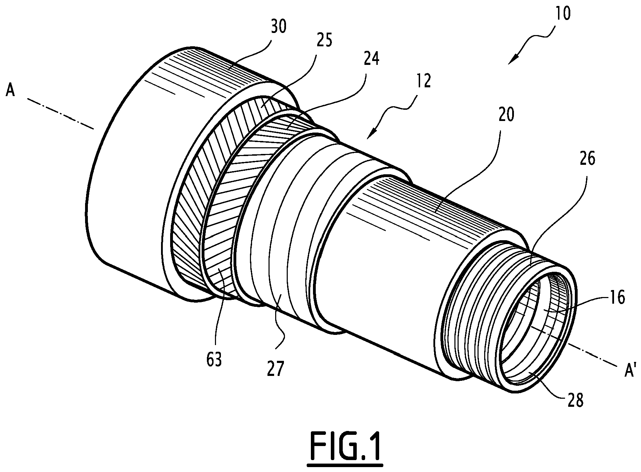

Une première conduite flexible 10 selon l'invention est illustrée partiellement par la figure 1.

La conduite flexible 10 comporte un tronçon central 12. Elle comporte, à chacune des extrémités axiales du tronçon central 12, un embout d'extrémité (non visible).

En référence à la figure 1, la conduite 10 délimite un passage central 16 de circulation d'un fluide, avantageusement d'un fluide pétrolier. Le passage central 16 s'étend suivant un axe A-A', entre l'extrémité amont et l'extrémité aval de la conduite 10.

La conduite flexible 10 est destinée à être disposée à travers une étendue d'eau (non représentée) dans une installation d'exploitation de fluide, notamment d'hydrocarbures.

L'étendue d'eau est par exemple, une mer, un lac ou un océan. La profondeur de l'étendue d'eau au droit de l'installation d'exploitation de fluide est par exemple comprise entre 500 m et 3000 m.

L'installation d'exploitation de fluide comporte un ensemble de surface notamment flottant et un ensemble de fond (non représentés) qui sont généralement raccordés entre eux par la conduite flexible 10.

La conduite flexible 10 est de préférence une conduite « non liée » (désignée par le terme anglais « unbonded »).

Au moins deux couches adjacentes de la conduite flexible 10 sont libres de se déplacer longitudinalement l'une par rapport à l'autre lors d'une flexion de la conduite.

Avantageusement, toutes les couches de la conduite flexible sont libres de se déplacer l'une par rapport à l'autre. Une telle conduite est par exemple décrite dans les documents normatifs publiés par l'American Petroleum Institute (API), API 17J, et API RP17B.

Comme illustré par la figure 1, la conduite 10 délimite une pluralité de couches concentriques autour de l'axe A-A', qui s'étendent continûment le long du tronçon central 12 jusqu'aux embouts 14 situés aux extrémités de la conduite.

Selon l'invention, la conduite 10 comporte au moins une première gaine tubulaire 20 à base de matériau polymère constituant avantageusement une gaine de pression.

La conduite 10 comporte en outre au moins une couche d'armures de traction 24, 25 disposée extérieurement par rapport à la première gaine 20 formant une gaine de pression.

La conduite 10 comporte en outre une carcasse interne 26 disposée à l'intérieur de la gaine de pression 20, éventuellement une voûte de pression 27 intercalée entre la gaine de pression 20 et la ou les couches d'armures de traction 24, 25 et une gaine externe 30, destinée à la protection de la conduite 10.

Selon l'invention, la conduite 10 comporte en outre un insert 28 présentant une section transversale en forme de T, l'insert 28 étant disposé en appui intérieur sur la carcasse interne 26.

De manière connue, la gaine de pression 20 est destinée à confiner de manière étanche le fluide transporté dans le passage 16. Elle est formée en matériau polymère, par exemple à base d'un polyoléfine tel que du polyéthylène, à base d'un polyamide tel que du PA11 ou du PA12, ou à base d'un polymère fluoré tel que du polyfluorure de vinylidène (PVDF).

L'épaisseur de la gaine de pression 20 est par exemple comprise entre 5 mm et 20 mm.

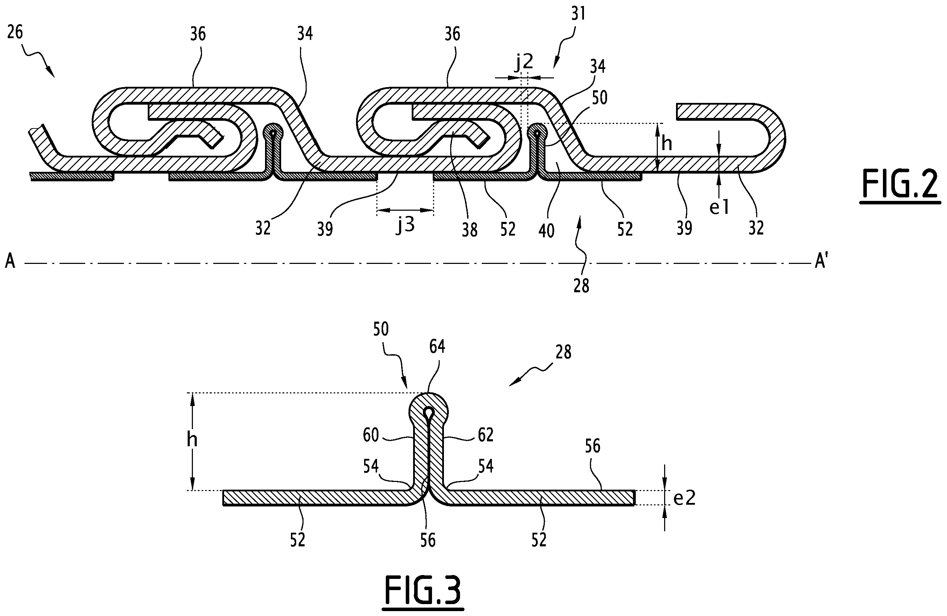

Comme illustré par la figure 2, la carcasse 26 est formée ici d'un premier feuillard 31 métallique profilé, enroulé en hélice. Les spires successives du feuillard 31 sont agrafées les unes aux autres.

La fonction principale de la carcasse 26 est de reprendre les efforts radiaux d'écrasement.

La carcasse 26 est disposée à l'intérieur de la gaine de pression 20. Elle est propre à entrer en contact avec le fluide circulant dans la gaine de pression 20.

L'enroulement hélicoïdal du premier feuillard 31 profilé formant la carcasse 26 est à pas court, c'est-à-dire qu'il présente un angle d'hélice de valeur absolue proche de 90°, typiquement compris entre 75° et 90°.

Le premier feuillard 31 présente deux bords repliés longitudinalement sur une région centrale. Il définit une pluralité de spires de section en forme de S aplati, telle qu'illustrées par la Figure 2. Le premier feuillard 31 présente une épaisseur e1 sensiblement constante.

La section en S de chaque spire de la carcasse 26 comprend successivement, parallèlement à l'axe A-A' de droite à gauche sur la figure 2, une partie intérieure 32 en forme générale de U, une partie intermédiaire inclinée 34 et une partie extérieure 36 en forme générale de U présentant, au voisinage de son extrémité libre, une onde d'appui 38, communément désignée par le terme « téton ».

La partie intérieure 32 de chaque spire du premier feuillard 31 est repliée vers la partie intermédiaire 34 à l'écart de l'axe central A-A', extérieurement par rapport à la partie inclinée 34. Elle définit une section en U s'étendant parallèlement à l'axe A-A' et s'ouvrant en regard de la partie inclinée 34.

La partie extérieure 36 d'une spire adjacente est partiellement engagée dans la partie intérieure 32, l'onde d'appui 38 étant intercalée entre les branches du U.

La partie intérieure 32 définit une surface intérieure 39 située sur une enveloppe cylindrique d'axe A-A'.

La partie extérieure 36 définit également une section en U s'étendant parallèlement à l'axe A-A' et s'ouvrant en regard de la partie inclinée 34.

La partie extérieure 36 de chaque spire est repliée vers la partie intermédiaire 34, vers l'axe central A-A', intérieurement par rapport à la partie inclinée 34. La partie extérieure 36 et l'onde d'appui 38 de la section sont reçus dans la partie intérieure 32 d'une section adjacente, et recouvrent partiellement vers l'extérieur la partie intérieure 32 de la section adjacente.

Pour chaque spire, la partie intermédiaire 34, la partie extérieure 36 et la partie intérieure 32 d'une section adjacente délimitent un interstice intérieur 40, définissant partiellement ou totalement le jeu axial de la carcasse 26.

L'interstice 40 débouche radialement vers l'axe central A-A'. Pour chaque spire, il s'ouvre intérieurement vers l'axe A-A' entre les surfaces intérieures 39 des parties intérieures 32 de deux spires adjacentes.

Il est obturé extérieurement par la partie extérieure 36 et latéralement par la partie intermédiaire 34 d'une spire et par la partie intérieure 32 d'une spire adjacente.

L'interstice 40 s'étend ainsi continûment en forme d'hélice d'axe A-A' suivant un pas P1 le long de la carcasse 26.

Chaque spire de la carcasse 26 présente une largeur avantageusement comprise entre 25 mm et 100 mm. Cette largeur tient compte de l'épaisseur de la tige 50 de l'insert 28 introduite dans l'interstice 40.

La carcasse 26 présente, entre chaque paire de spires agrafées, un premier jeu axial défini par la course axiale de coulissement relatif de la partie extérieure 36 d'une spire dans la partie intérieure 32 d'une spire adjacente dans laquelle elle est engagée.

Selon l'invention, l'insert 28 est disposé partiellement dans l'interstice 40 et obture l'interstice 40 vers l'axe A-A'.

L'insert 28 présente ainsi avantageusement une forme hélicoïdale d'axe A-A', de pas P1 analogue au pas de l'interstice 40.

Comme illustré par la figure 3, l'insert 28 présente une section, prise dans un plan axial médian, en forme générale de T.

Il comporte une tige 50 au moins partiellement insérée dans l'interstice 40, des ailes 52 faisant saillie transversalement à partir d'une extrémité intérieure 56 de la tige 50, et des tronçons recourbés 54 de liaison entre la tige 50 et des ailes 52.

Selon l'invention, l'insert 28 est réalisé d'un seul tenant par pliage d'un deuxième feuillard 56.

Le deuxième feuillard 56 est de préférence métallique. Il présente avantageusement une épaisseur e2 constante. L'épaisseur e2 du deuxième feuillard 56 est de préférence inférieure à l'épaisseur e1 du premier feuillard 31. L'épaisseur e2 du deuxième feuillard 56 est avantageusement comprise entre un tiers et deux tiers de l'épaisseur e1 du premier feuillard 31.

L'épaisseur e2 est par exemple comprise entre 0,5 mm et 2 mm, notamment entre 0,8 mm et 1,5 mm.

Une telle épaisseur garantit une raideur suffisante, tout en limitant le risque de désorganisation lors de l'introduction d'une sonde dans le passage central (« pigging » en anglais).

Dans l'exemple représenté sur la figure 3, la tige 50 est formée par réalisation d'un double pli dans la région centrale du feuillard 56.

La tige 50 fait saillie perpendiculairement par rapport aux ailes 52.

La tige 50 comprend ainsi un premier flan 60, et un deuxième flan 62, avantageusement appliqué sur le premier flan 60. La tige 50 comprend en outre, à son extrémité libre extérieure, un tronçon extérieur recourbé 64 raccordant les flans 60, 62.

Le premier flan 60 et le deuxième flan 62 s'étendent de préférence dans des plans perpendiculaires à l'axe A-A' de l'hélice engendrée par l'insert 28. Ils présentent chacun une épaisseur sensiblement égale à l'épaisseur e2.

Le tronçon recourbé 64 présente un rayon de courbure de préférence supérieur à 0,5 fois l'épaisseur e2 du deuxième feuillard 56, et avantageusement compris entre 0,5 et 1 fois l'épaisseur e2. Ceci limite les risques de fissuration du deuxième feuillard 56.

La hauteur h de la tige 50, prise perpendiculairement à l'axe A-A' depuis les ailes 52 jusqu'à l'extrémité libre extérieure est de préférence supérieure à trois fois l'épaisseur e1 du premier feuillard 31.

Comme indiqué plus haut, la tige 50 est insérée dans l'interstice 40, en définissant un jeu axial dans cet interstice 40.

Lorsque la tige 50 est située au pas moyen de l'interstice 40, le demi jeu moyen j2 est supérieur ou égal au quart du jeu total de la carcasse 26. Ceci évite les risques de chevauchement entre les différentes spires de l'insert 28.

La tige 50 est ainsi libre de coulisser axialement dans l'interstice 40 entre la partie intermédiaire 34 d'une spire de la carcasse 26 et la partie intérieure 32 d'une spire adjacente de la carcasse 26.

Chaque aile 52 s'étend sensiblement sur une enveloppe cylindrique d'axe A-A'. Elle fait saillie axialement à partir de la tige 50.

Chaque aile 52 est disposée hors de l'interstice 40. Elle s'applique au moins partiellement sur la surface intérieure 39 de la partie intérieure 32 d'une spire de la carcasse 26.

L'aile 52 présente un bord libre de préférence arrondi.

La largeur de chaque aile 52, prise axialement le long de l'axe A-A', est suffisante pour permettre un contact sur la surface intérieure 39 de la partie intérieure 32 d'une spire de la carcasse 26.

Cette largeur est également choisie pour délimiter un jeu axial j3, défini entre les ailes 52 en regard de deux spires successives de l'insert 28, supérieur avantageusement au jeu axial de la carcasse 26.

Ainsi, les chevauchements entre les différentes spires de l'insert 28 sont évités, chaque aile 52 d'une spire restant en permanence à l'écart axialement de l'aile 52 de d'une spire adjacente.

Les ailes 52 sont propres à coulisser librement le long de l'axe A-A' sur les surfaces intérieures 59 des parties intérieures 32.

Typiquement, la largeur de chaque aile 52 est comprise entre 5 mm et 25 mm, la largeur totale de chaque spire de l'insert 18 étant comprise avantageusement entre 10 mm et 50 mm, notamment entre 20 mm et 30 mm.

Chaque tronçon de liaison 54 raccorde un flan 60, 62 à une aile 52. Le rayon de courbure du tronçon de liaison 54 est supérieur à 0,5 fois l'épaisseur e2 du deuxième feuillard 56, et est notamment compris entre 0,5 fois et 1 fois l'épaisseur e2.

En référence à la figure 1, la voûte de pression 27 est destinée à reprendre les efforts liés à la pression régnant à l'intérieur de la gaine de pression 20. Elle est par exemple formée d'un fil profilé métallique entouré en hélice autour de la gaine 20. Le fil profilé présente généralement une géométrie complexe, notamment en forme de Z, de T, de U, de K, de X ou de I.

La voûte de pression 27 est enroulée en hélice à pas court autour de la gaine de pression 20, c'est-à-dire avec un angle d'hélice de valeur absolue proche de 90°, typiquement compris entre 75° et 90°.

La conduite flexible 10 selon l'invention comprend au moins une couche d'armures 24, 25 formée d'un enroulement hélicoïdal d'au moins un élément d'armure 63 allongé.

Dans l'exemple représenté sur la figure 1, la conduite flexible 10 comporte une pluralité de couches d'armures 24, 25, notamment une couche d'armures intérieure 24, appliquée sur la voûte de pression 27 et une couche d'armures extérieure 25 autour de laquelle est disposée la gaine extérieure 30.

Chaque couche d'armures 24, 25 comporte des éléments d'armure 63 longitudinaux enroulés à pas long autour de l'axe A-A' de la conduite.

Par « enroulé à pas long », on entend que la valeur absolue de l'angle d'hélice est inférieure à 60°, et est typiquement comprise entre 25° et 55°.

Les éléments d'armure 63 d'une première couche 24 sont enroulés généralement suivant un angle opposé par rapport aux éléments d'armure 63 d'une deuxième couche 25. Ainsi, si l'angle d'enroulement des éléments d'armure 63 de la première couche 24 est égal à + α, α étant compris entre 25° et 55°, l'angle d'enroulement des éléments d'armure 63 de la deuxième couche d'armures 25 disposée au contact de la première couche d'armures 24 est par exemple égal à - α°.

Les éléments d'armure 63 sont par exemple formés par des fils métalliques, notamment des fils en acier, ou par des rubans en matériau composite, par exemple des rubans renforcés de fibres de carbone.

La gaine externe 30 est destinée à empêcher la perméation de fluide depuis l'extérieur de la conduite flexible 10 vers l'intérieur. Elle est avantageusement réalisée en matériau polymère, notamment à base d'un polyoléfine, tel que du polyéthylène, ou à base d'un polyamide, tel que du PA11 ou du PA12

L'épaisseur de la gaine externe 30 est par exemple comprise entre 5 mm et 15 mm.

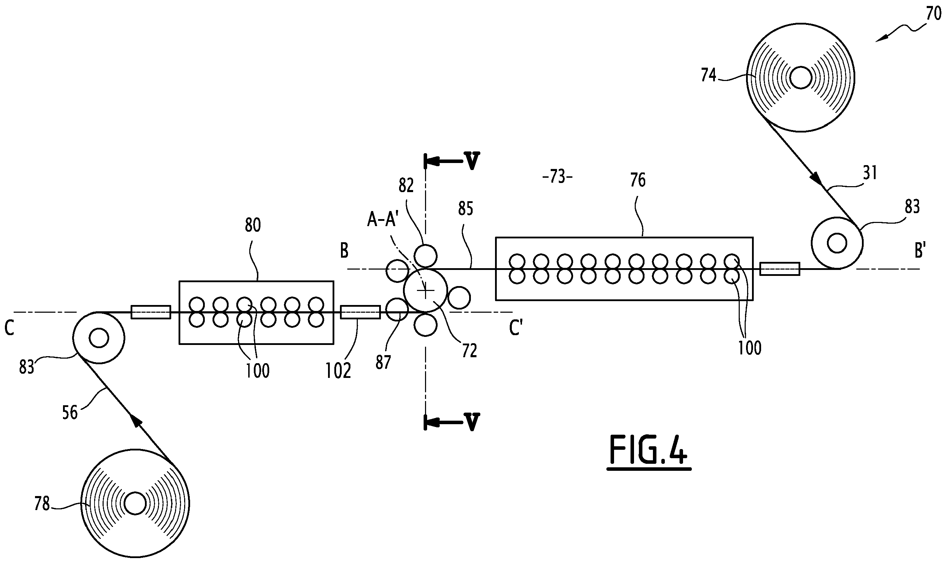

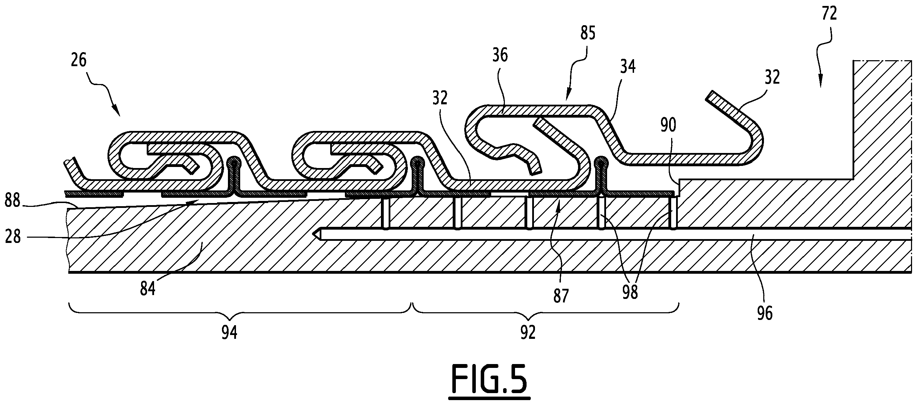

La carcasse 26 et l'insert 28 sont fabriqués et sont mis en place simultanément dans un poste 70 de fabrication et de pose, illustré schématiquement par les figures 4 et 5.

Comme illustré par ces figures, le poste 70 comporte un mandrin 72 rotatif autour d'un axe A-A', destiné à guider l'enroulement de la carcasse 26 et de l'insert 28.

Le poste 70 comporte un support 73 rotatif autour de l'axe A-A' et par rapport au mandrin 72, un premier dérouleur 74 (représenté schématiquement) recevant le premier feuillard 31, et une profileuse de carcasse 76 disposée en aval du premier dérouleur 74 entre le premier dérouleur 74 et le mandrin 72.

Le poste 70 comporte en outre un deuxième dérouleur 78 (représenté schématiquement) recevant le deuxième feuillard 56, une profileuse d'insert 80, disposée en aval du deuxième dérouleur 78 entre le deuxième dérouleur 78 et le mandrin 72.

Le poste 70 comporte en outre des organes 82 de placage radial de la carcasse 26 et de l'insert 28 contre le mandrin 72, et avantageusement, des organes de renvoi 83 pour guider le premier feuillard 31 et le deuxième feuillard 56 à partir de chaque dérouleur 74, 78 vers une profileuse 76, 80 respective.

Le mandrin rotatif 72 fait saillie axialement par rapport au support 73 le long d'un axe A-A' d'enroulement.

En référence à la figure 5, le mandrin 72 comporte un corps 84 d'appui, sur lesquels un premier profil 85 de carcasse, obtenu à partir du premier feuillard 31 déformé dans la profileuse de carcasse 76 et un deuxième profil 87 d'insert, obtenu à partir du deuxième feuillard 56 déformé dans la profileuse d'insert 80 sont appliqués.

Dans cet exemple, le mandrin rotatif 72 comporte en outre un ensemble 86 de lubrification de la surface extérieure 88 du corps 84.

Le corps d'appui 84 présente par exemple un revêtement de surface approprié pour diminuer son coefficient de frottement. Le coefficient de frottement de la surface extérieure 88 par rapport à l'insert 28 est par exemple inférieur à 0,1 en présence de lubrification.

Le corps d'appui 84 définit, sur sa surface extérieure 88, une butée amont 90 de positionnement du profil d'insert 87.

Il présente une région amont 92 sensiblement cylindrique d'assemblage de l'insert 28 et de la carcasse 26 à partir des profils 85, 87 et une région aval tronconique 94 de dégagement de l'insert 28 et de la carcasse 26.

L'ensemble de lubrification 86 comporte un canal central 96 d'injection de lubrifiant ménagé dans le corps d'appui 84. Le canal 96 débouche par des ouvertures transversales 98 dans la région amont 92.

Le mandrin rotatif 72 est propre à être entraîné en rotation autour de l'axe A-A' avec une vitesse et un sens de rotation différents de ceux du support 73.

Avantageusement, le mandrin 72 est entraîné en rotation dans un sens opposé à celui du support 73, et avec une vitesse inférieure à 10 % ce celle du support 73.

Ceci autorise un dégagement rapide de l'insert 28 formé en appui sur la surface 88, et évite les problèmes de grippage ou de coincement de la carcasse 26 sur le mandrin 72.

La rotation du mandrin rotatif 72 tend à augmenter localement le diamètre interne de la carcasse 26 pour favoriser son évacuation.

Le support 73 comporte par exemple un plateau entraîné en rotation autour de l'axe A-A' dans le sens d'enroulement de l'insert 28 et de la carcasse 26.

Il porte les dérouleurs 74, 78, et les profileuses 76, 80. Dans cet exemple, les profileuses 76, 80 sont disposées diamétralement à l'opposé l'une de l'autre, de part et d'autre d'un plan axial médian passant par l'axe A-A', afin de permettre l'enroulement du deuxième profil 87 formant l'insert 28 sous l'enroulement du premier profil 85 formant la carcasse 26.

Chaque profileuse 76, 80 comporte une pluralité de paires de galets 100 de déformation du feuillard 31, 56, qui définissent un axe B-B', C-C' tangentiel respectif d'alimentation respectivement de la carcasse 26 et de l'insert 28 sur le mandrin 72.

Les profileuses 76, 80 sont mobiles en translation sur le support 73 dans un plan perpendiculaire à l'axe A-A' d'enroulement. La profileuse d'insert 80 est apte à être pivotée autour de son axe C-C' pour régler l'angle d'introduction de l'insert 28 dans l'interstice 40.

La profileuse d'insert 80 est propre à fonctionner en « fil poussé », afin de pousser le deuxième profil 87 formant l'insert 28 sur la surface extérieure 88 du mandrin 72.

Elle comporte un organe de guidage 102 qui assure le guidage du deuxième profil 87 au plus près du point de pose pour éviter son flambage et amener suffisamment du profil 87 pour assurer le frettage de l'insert 28 sur l'intérieur de la carcasse 26.

Les organes de placage radial 82 sont disposés radialement autour de la surface 88. Ils comportent par exemple des molettes propres à s'appliquer radialement à l'extérieur de l'insert 28 et de la carcasse 26 pour finaliser la disposition de l'insert 28 dans l'interstice hélicoïdal 40, et l'agrafage de la carcasse 26, comme représenté sur la figure 5.

Dans une variante, pour faciliter le dégagement de l'insert 28 et de la carcasse 26 à l'écart du mandrin 72, les organes de placage radial 82 situé sur le mandrin 72 sont aptes à fermer uniquement partiellement la carcasse 26. Un mandrin spécifique (non représenté), associé à des organes de placage additionnel est alors prévu en aval du mandrin 72.

Un procédé de fabrication de la conduite flexible 10 va maintenant être décrit. Initialement, les feuillards 31, 56 sont chargés sur les dérouleurs 74, 78.

Puis, les feuillards 31, 56 sont déroulés pour être introduits respectivement dans les profileuses 76, 80. Simultanément, le support 73 est entraîné en rotation autour de l'axe A-A'.

Dans la profileuse de carcasse 76, le premier feuillard 31 se déforme successivement pour réaliser le premier profil 85 comportant la partie intérieure 32, la partie intermédiaire 34 et la partie extérieure 36, sans refermer totalement la partie intérieure 32 et la partie extérieure 36, comme illustré par la figure 5.

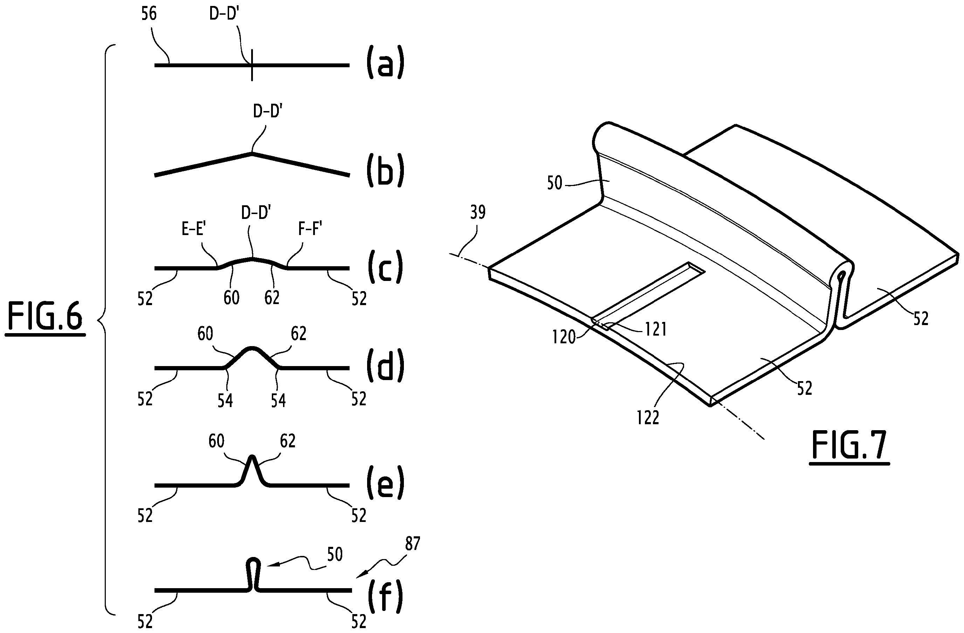

Dans la profileuse d'insert 80, comme illustré par la figure 6, le deuxième feuillard 56 est tout d'abord déformé et plié par les galets de la profileuse 80 suivant un axe central D-D' (étapes (a) et (b) sur la figure 6). Il est ensuite déformé et plié le long d'axes intermédiaires E-E', F-F' situés de part et d'autre de l'axe central D-D' pour former les ailes 52, les tronçons repliés 54 et les flancs 60, 62 (étapes (c) et (d) sur la figure 6). La déformation se poursuit en plaquant les flancs 60, 62 l'un contre l'autre (étapes (e) et (f) sur la figure 6).

Un deuxième profil 87 en T comprenant une tige 50 et des ailes 52 est alors obtenu, pour former l'insert 28.

Ce deuxième profil 87 est alimenté en « fil poussé » à travers l'organe de guidage 102, en étant orienté radialement par rapport à l'axe A-A' du mandrin 72.

Il se plaque sur la surface extérieure 88 du corps 84 et s'enroule en hélice, au pas souhaité pour l'insertion dans l'interstice 40, formant ainsi l'insert 28.

Simultanément, le premier profil 85 issu de la déformation du premier feuillard 31 s'enroule autour du deuxième profil 87 en insérant la partie extérieure 36 partiellement ouverte de chaque spire dans la partie intérieure 32 d'une spire adjacente, la tige 50 de l'insert 28 étant intercalée entre la partie intermédiaire 34 de la spire et la partie intérieure 32 de la spire adjacente.

Les organes de placage radial 82 sont alors appliqués à l'extérieur de la carcasse 26 et de l'insert 28 pour refermer et agrafer la carcasse 26, tout en assurant le frettage interne de l'insert 28 dans l'interstice hélicoïdal 40.

Les spires ainsi formées de la carcasse 26 et de l'insert 28 se dégagent progressivement vers l'aval, en se détachant du mandrin 72 sous l'effet de la lubrification apportée par l'ensemble de lubrification 86, de la forme tronconique de la partie aval 94 du corps 84, et du différentiel de rotation entre le support 73 et le mandrin 72 tendant à gonfler la carcasse 26.

Une fois la carcasse 26 réalisée, et l'insert 28 disposé dans la carcasse 26, la gaine interne 20 est formée autour de la carcasse 26, par exemple par extrusion. La voûte de pression 27 et les couches d'armures 24, 25 sont alors enroulées autour de la gaine interne 20.

La gaine externe 30 est ensuite réalisée avantageusement par extrusion, en étant disposée à l'extérieur des couches d'armures 24, 25.

Dans une variante, au moins un conduit 120 de passage de fluide raccordant l'interstice 40 au passage de circulation 16 est ménagé dans l'insert 18.

Dans l'exemple représenté sur les figures 7, 8 et 9, au moins un conduit 120 est formé axialement dans chaque aile 52. Le conduit 120 s'étend depuis le bord libre de l'aile 52 en direction de la tige 50.

La première extrémité de ce conduit 120, située du coté du bord libre de l'aile 52, débouche directement dans le passage 16 de la conduite 10.

L'autre extrémité de ce conduit 120 est située à proximité de la tige 50 de sorte qu'elle débouche directement dans un interstice hélicoïdal 40 de la carcasse 26. Le conduit 120 permet donc la circulation de fluides entre d'une part l'interstice 40 et d'autre part le passage de circulation 16.

Ainsi, grâce au conduit 120, l'ensemble intérieur formé par la carcasse 26 et l'insert 28 est perméable au passage de fluide depuis l'intérieur de la carcasse 26 vers le passage de circulation 16 de la conduite 10. Cette caractéristique permet d'éviter d'endommager l'insert 28 lorsque la conduite 10 transporte un fluide sous forte pression, notamment un gaz, et qu'elle doit être dépressurisée ou pressurisée rapidement.

En effet, une différence importante de pression entre les faces interne et externe de l'insert 28 pourrait endommager irréversiblement l'insert 28. Il est donc avantageux d'équilibrer les pressions de part et d'autre de l'insert 28 en facilitant l'écoulement de fluides entre l'interstice 40 et le passage de circulation 16. Le conduit 120 réduit les pertes de charge de cet écoulement, ce qui limite la différence de pression entre les faces interne et externe de l'insert 28, et ceci même lorsque la conduite est dépressurisée ou pressurisée rapidement.

Dans l'exemple représenté sur la figure 7, le conduit 120 est délimité par une empreinte 121 axiale ménagée dans la surface extérieure 122 de l'aile 52 disposée en appui sur la surface intérieure 39. La profondeur de l'empreinte 121 est avantageusement comprise entre 10% et 30% de l'épaisseur e2 de l'aile 52.

La largeur de l'empreinte 121, mesurée perpendiculairement à l'axe longitudinal du canal 120, est avantageusement comprise entre une fois et trois fois l'épaisseur e2 de l'aile 52.

Afin de faciliter l'écoulement des fluides de part et d'autre de l'insert 28 sur toute la longueur de la conduite 10, il est avantageux de disposer un grand nombre d'empreintes 121 tout le long de l'insert 28. Avantageusement, l'insert comporte au moins une empreinte 121 par mètre linéaire d'insert 28, préférentiellement au moins une empreinte 121 par décimètre linéaire d'insert 28. Pour les applications très sévères de transport de gaz sous forte pression, l'insert 28 peut comporter jusqu'à une empreinte 121 par centimètre linéaire d'insert 28.

Ces empreintes 121 sont avantageusement fabriquées en même temps que l'insert 28 par le poste de fabrication 70. A cet effet, la profileuse d'insert 80 est équipée d'une pluralité de paires de galets 100 dont au moins une, avantageusement celle situés la plus en aval, comprend un galet munis de bossages en relief destinés à écraser localement le deuxième feuillard 56 pour générer les empreintes 121. La distance séparant deux empreintes 121 voisines le long de l'insert 28 dépend du diamètre de ce galet, ainsi que du nombre et de la position angulaire des bossages dont il est muni.

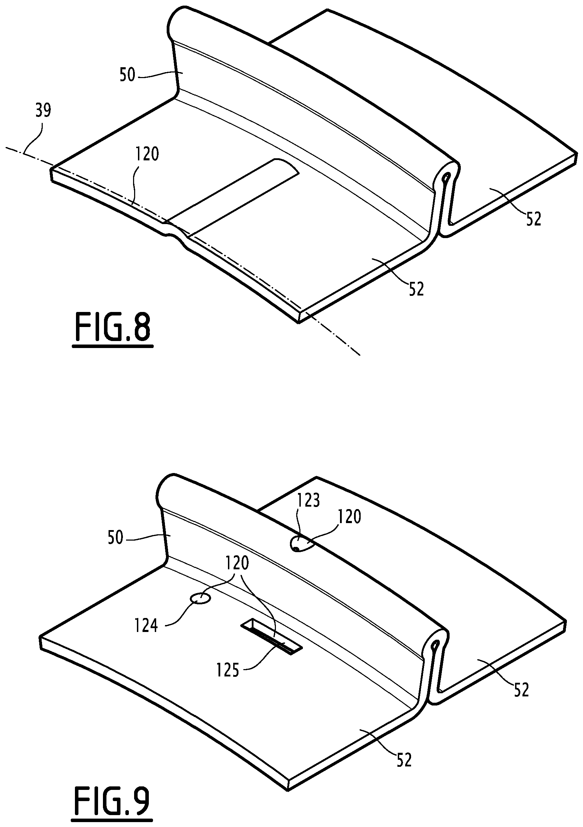

Dans la variante représentée sur la figure 8, le conduit 120 est délimité par un relief en forme d'onde disposé en appui sur la surface intérieure 39, pour écarter au moins partiellement la surface extérieure 122 de la surface intérieure 39.

Ainsi, l'ensemble intérieur formé par la carcasse 26 et l'insert 28 est perméable au passage de fluide depuis l'intérieur de la carcasse 26 vers l'extérieur de la carcasse 26.

Dans la variante représentée sur la figure 9, le conduit 120 est formé par un trou 123, 124, 125 traversant de part en part le deuxième feuillard 56. Selon une première variante, le trou 124, 125 traverse l'aile 52 au voisinage de la tige 50, de façon à déboucher directement dans l'interstice 40. Selon une deuxième variante, le trou 123 traverse le tronçon extérieur recourbé 64 de la tige 50, l'écoulement se prolongeant entre le premier flanc 60 et le deuxième flanc 62.

Dans une variante (non représentée), chaque aile 52 est formée par une paire de flans repliés l'un sur l'autre par l'intermédiaire d'une région recourbée au niveau du bord libre.

Les flans 60, 62 de la tige sont alors disjoints à leur extrémité libre. Chaque flan 60, 62 fait saillie à partir d'un flan respectif d'une aile 52.

## Revendications

1. Conduite flexible (10) de transport de fluide, comprenant :
- une gaine interne (20) en polymère délimitant un passage (16) de circulation de fluide d'axe central (A-A') ;
- au moins une couche d'armures (24, 25) disposée à l'extérieur de la gaine interne (20) ;
- une carcasse interne (26), disposée dans la gaine interne (20), la carcasse interne (26) comprenant un premier feuillard (31) plié délimitant un interstice (40) hélicoïdal débouchant vers l'axe central (A-A') ;
- un insert (28) hélicoïdal de section en forme de T comprenant une tige (50) insérée dans l'interstice hélicoïdal (40) et deux ailes (52) faisant saillie de part et d'autre de la tige (50) pour obturer vers l'intérieur l'interstice hélicoïdal (40) ;
**caractérisé en ce que** l'insert hélicoïdal (28) est formé d'un deuxième feuillard (56) plié.

2. Conduite (10) selon la revendication 1, **caractérisé en ce que** la tige (50) comporte un premier flan (60) et un deuxième flan (62) replié contre le premier flan (60).

3. Conduite (10) selon la revendication 2, **caractérisé en ce que** la tige (50) comporte un tronçon extérieur (64) recourbé à l'extrémité libre extérieure de la tige (50), le tronçon extérieur (64) recourbé raccordant le premier flan (60) au deuxième flan (62).

4. Conduite (10) selon la revendication 3, **caractérisé en ce que** le rayon de courbure du tronçon extérieur (64) recourbé est supérieur à 0,5 fois l'épaisseur du deuxième feuillard (56), et est notamment compris entre 0,5 fois et 1 fois l'épaisseur du deuxième feuillard (56).

5. Conduite (10) selon l'une quelconque des revendications 2 à 4, **caractérisé en ce que** chaque aile (42) fait saillie à partir d'une extrémité intérieure respectivement du premier flan (60) et du deuxième flan (62), l'insert hélicoïdal (28) comportant un premier tronçon de liaison (54) recourbé raccordant le premier flan (60) à une aile (42) et un deuxième tronçon de liaison (54) recourbé raccordant le deuxième flan (62) à une aile (42), chaque tronçon de liaison (54) présentant un rayon de courbure avantageusement supérieur à 0,5 fois l'épaisseur du deuxième feuillard (56).

6. Conduite (10) selon l'une quelconque des revendications précédentes, **caractérisée en ce que** la tige (50) présente une étendue radiale supérieure à trois fois l'épaisseur du premier feuillard (31).

7. Conduite (10) selon l'une quelconque des revendications précédentes, **caractérisé en ce que** la carcasse interne (26) présente un premier jeu axial, l'insert (28) hélicoïdal présentant des spires non jointives délimitant entre elles un deuxième jeu axial supérieur au premier jeu axial.

8. Conduite (10) selon l'une quelconque des revendications précédentes, **caractérisée en ce que** la carcasse interne (26) présente un premier jeu axial, la tige (50) présentant un demi jeu axial au pas moyen dans l'interstice hélicoïdal (40) supérieur à 0,25 fois le premier jeu axial.

9. Conduite (10) selon l'une quelconque des revendications précédentes, **caractérisé en ce que** l'insert (28) délimite au moins un conduit (120) de passage de fluide raccordant l'interstice (40) au passage de circulation (16).

10. Procédé de fabrication d'une conduite flexible (10), comprenant les étapes suivantes :
- formation d'une carcasse interne (26), la carcasse interne (26) comprenant un premier feuillard (31) plié délimitant un interstice hélicoïdal (40) débouchant vers l'axe central (A-A') ;
- réalisation d'une gaine interne (20) en polymère délimitant un passage (16) de circulation de fluide d'axe central (A-A'), la carcasse interne (26) étant disposée dans la gaine interne (20) ;
- disposition d'au moins une couche d'armures (24, 25) externe à l'extérieur de la gaine interne (20) ;
le procédé comportant la mise en place d'un insert (28) hélicoïdal de section en forme de T comprenant une tige (50) insérée dans l'interstice hélicoïdal (40) et deux ailes (52) faisant saillie de part et d'autre de la tige (50) pour obturer vers l'intérieur l'interstice hélicoïdal (40),
**caractérisé en ce que** l'insert hélicoïdal (28) est formé par pliage d'un deuxième feuillard (56).

11. Procédé selon la revendication 10, **caractérisé en ce qu'**il comporte le passage du deuxième feuillard (56) dans une profileuse d'insert (80) pour former un profil d'insert (87) de section en forme de T et l'enroulement du profil d'insert (87) autour d'un mandrin (72), le procédé comportant le passage du premier feuillard (31) dans une profileuse de carcasse (76) pour former un profil de carcasse (85) et l'enroulement du profil de carcasse (85) autour du profil d'insert (87) sur le mandrin (72).

12. Procédé selon la revendication 11, **caractérisé en ce que** la profileuse d'insert (80) et la profileuse de carcasse (76) sont disposées de part et d'autre du mandrin (72), le profil d'insert (87) étant amené sur le mandrin (72) à l'opposé du profil de carcasse (85).

13. Procédé selon l'une quelconque des revendications 11 à 12, **caractérisé en ce qu'**il comporte une étape de fermeture du profil de carcasse (85) après son enroulement autour du profil d'insert (87).

14. Procédé selon l'une quelconque des revendications 11 à 13, **caractérisé en ce que** le passage du deuxième feuillard (56) dans la profileuse d'insert (80) comporte le pliage du deuxième feuillard (56) suivant un axe central (D-D') pour former la tige (50) et le pliage du feuillard (56) suivant deux axes intermédiaires (E-E' ; F-F') parallèles à l'axe central (D-D') pour former les ailes (52).

15. Procédé selon l'une quelconque des revendications 11 à 14, **caractérisé en ce que** le profil d'insert (28) est poussé sur le mandrin (72) après son passage dans la profileuse d'insert (80).

## Patentansprüche

1. Flexibles Rohr (10) zum Fluidtransport, aufweisend:
- eine innere Hülle (20) aus Polymer, die eine Fluid-Zirkulationspassage (16) mit zentraler Achse (A-A') begrenzt,
- wenigstens eine Schicht von Armierungen (24, 25), die an der Außenseite der inneren Hülle (20) angeordnet ist,
- eine innere Karkasse (26), die in der inneren Hülle (20) angeordnet ist, wobei die innere Karkasse (26) ein erstes gefalztes Band (31) aufweist, das einen wendelförmigen Zwischenraum (40) begrenzt, der zu der zentralen Achse (A-A') hin ausmündet,
- einen wendelförmigen Einsatz (28) mit T-förmigem Querschnitt, der aufweist einen Steg (50), der in den wendelförmigen Zwischenraum (40) eingesetzt ist, und zwei Flügel (52), die beidseitig des Stegs (50) vorstehen zum Absperren gegen das Innere des wendelförmigen Zwischenraums (40),
**dadurch gekennzeichnet, dass** der wendelförmige Einsatz (28) von einem zweiten gefalzten Band (56) gebildet ist.

2. Rohr (10) gemäß Anspruch 1, **dadurch gekennzeichnet, dass** der Steg (50) ein erstes Plättchen (60) und ein zweites Plättchen (62) aufweist, das gegen des erste Plättchen (60) gefaltet ist.

3. Rohr (10) gemäß Anspruch 2, **dadurch gekennzeichnet, dass** der Steg (50) einen äußeren, umgebogenen Abschnitt (64) am freien äußeren Ende des Stegs (50) aufweist, wobei der äußere, umgebogene Abschnitt (64) das erste Plättchen (60) mit dem zweiten Plättchen (62) verbindet.

4. Rohr (10) gemäß Anspruch 3, **dadurch gekennzeichnet, dass** der Krümmungsradius des äußeren, umgebogenen Abschnitts (64) größer als das 0,5-fache der Dicke des zweiten Bands (56) ist und insbesondere zwischen dem 0,5-fachen und dem 1-fachen der Dicke des zweiten Bands (56) liegt.

5. Rohr (10) gemäß irgendeinem der Ansprüche 2 bis 4, **dadurch gekennzeichnet, dass** jeder Flügel (42) ausgehend von einem inneren Ende respektive des ersten Plättchen (60) und des zweiten Plättchens (62) aus vorsteht, wobei der wendelförmige Einsatz (28) einen ersten gebogenen Verbindungsabschnitt (54), der das erste Plättchen (60) mit einem Flügel (42) verbindet, und einen zweiten gebogenen Verbindungsabschnitt (54) aufweist, der das zweite Plättchen (62) mit einem Flügel (42) verbindet, wobei jeder Verbindungsabschnitt (54) einen Krümmungsradius hat, der vorteilhafterweise größer als das 0,5-fache der Dicke des zweiten Bands (56) ist.

6. Rohr (10) gemäß irgendeinem der vorhergehenden Ansprüche, **dadurch gekennzeichnet, dass** der Steg (50) eine radiale Erstreckung hat, die größer als das drei-fache der Dicke des ersten Bands (31) ist.

7. Rohr (10) gemäß irgendeinem der vorhergehenden Ansprüche, **dadurch gekennzeichnet, dass** die innere Karkasse (26) ein erstes axiales Spiel hat, wobei der wendelförmige Einsatz (28) nicht aneinandergesetzte Windungen hat, die zwischen sich ein zweites axiales Spiel begrenzen, das größer ist als das erste axiale Spiel.

8. Rohr (10) gemäß irgendeinem der vorhergehenden Ansprüche, **dadurch gekennzeichnet, dass** die innere Karkasse (26) ein erstes axiales Spiel hat, wobei der Steg (50) ein halbes axiales Spiel mit einer mittleren Ganghöhe im wendelförmigen Zwischenraum (40) hat, die größer als das 0,25 fache des ersten axialen Spiels ist.

9. Rohr (10) gemäß irgendeinem der vorhergehenden Ansprüche, **dadurch gekennzeichnet, dass** der Einsatz (28) wenigstens einen Kanal (120) für Fluiddurchgang begrenzt, der den Zwischenraum (40) mit der Zirkulationspassage (16) verbindet.

10. Verfahren zur Herstellung eines flexiblen Rohrs (10), aufweisend die folgenden Schritte:
- Bilden einer inneren Karkasse (26), wobei die innere Karkasse (26) ein erstes gefalztes Band (31) aufweist, das einen wendelförmigen Zwischenraum (40) begrenzt, der zu der zentralen Achse (A-A') hin ausmündet,
- Realisieren einer inneren Hülle (20) aus Polymer, die eine Fluid-Zirkulationspassage (16) mit zentraler Achse (A-A') begrenzt, wobei die innere Karkasse (26) in der inneren Hülle (20) angeordnet ist,
- Anordnen wenigstens einer äußeren Schicht von Armierungen (24, 25) an der Außenseite der inneren Hülle (20),
wobei das Verfahren aufweist das Bereitstellen eines wendelförmigen Einsatzes (28) mit T-förmigem Querschnitt, der ausweist einen Steg (50), der in den wendelförmigen Zwischenraum (40) eingesetzt ist, und zwei Flügel (52), die beidseitig des Stegs (50) vorstehen, zum Absperren gegen das Innere des wendelförmigen Zwischenraums (40),
**dadurch gekennzeichnet, dass** der wendelförmige Einsatz (28) gebildet wird durch Falzen eines zweiten Bands (56).

11. Verfahren gemäß Anspruch 10, **dadurch gekennzeichnet, dass** es aufweist das Passieren des zweiten Bands (56) durch eine Einsatz-Profilgebe-Einrichtung (80) zum Bilden eines Einsatzprofils (87) mit T-förmigem Querschnitt und das Wickeln des Einsatzprofils (87) um einen Dorn (72), wobei das Verfahren aufweist das Passieren des ersten Bands (31) durch eine Karkasse-Profilgebe-Einrichtung (76) zum Bilden eines Karkassen-Profils (85) und das Wickeln des Karkassen-Profils (85) um das Einsatz-Profil (87) auf dem Dorn (72).

12. Verfahren gemäß Anspruch 11, **dadurch gekennzeichnet, dass** die Einsatz-Profilgebe-Vorrichtung (80) und die Karkasse-Profilgebe-Vorrichtung (76) beidseitig des Dorns (72) angeordnet sind, wobei das Einsatz-Profil (87) gegenüberliegend zu dem Karkassen-Profil (85) auf den Dorn (72) aufgebracht wird.

13. Verfahren gemäß irgendeinem der Ansprüche 11 bis 12, **dadurch gekennzeichnet, dass** es aufweist einen Schritt des Schließens des Karkassen-Profils (85) nach dessen Aufwickeln um das Einsatz-Profil (87).

14. Verfahren gemäß irgendeinem der Ansprüche 11 bis 13, **dadurch gekennzeichnet, dass** das Passieren des zweiten Bands (56) durch die Einsatz-Profilgebe-Vorrichtung (80) aufweist das Falzen des zweiten Bands (56) entlang einer zentralen Achse (D-D') zum Bilden des Stegs (50) und das Falzen des Bands (56) entlang zweier Zwischenachsen (E-E'; F-F') parallel zur zentralen Achse (D-D') zum Bilden der Flügel (52).

15. Verfahren gemäß irgendeinem der Ansprüche 11 bis 14, **dadurch gekennzeichnet, dass** das Einsatz-Profil (28) auf den Dorn (72) gedrückt wird nach seinem Passieren durch die Einsatz-Profilgebe-Vorrichtung (80).

## Claims

1. A flexible pipe (10) for conveying a fluid, comprising:
- an inner polymer sheath (20) defining a fluid circulation path (16) with a central axis (A-A');
- at least one layer of armors (24, 25), arranged outside the inner sheath (20);
- an inner carcass (26), positioned in the inner sheath (20), the inner carcass (26) comprising a first bent tape (31) defining a helical interstice (40) emerging toward the central axis (A-A');
- a helical insert (28) with a T-shaped cross-section comprising a rod (50) inserted in the helical interstice (40) and two wings (52) protruding on either side of the rod (50) to inwardly close off the helical interstice (40);
**characterized in that** the helical insert (28) is formed of a second bent tape (56).

2. The pipe (10) according to claim 1, **characterized in that** the rod (50) includes a first blank (60) and a second blank (62) bent against the first blank (60).

3. The pipe (10) according to claim 2, **characterized in that** the rod (50) includes a curved outer segment (64) at the outer free end of the rod (50), the curved outer segment (64) connecting the first blank (60) to the second blank (62).

4. The pipe (10) according to claim 3, **characterized in that** the bending radius of the curved outer segment (64) is greater than 0.5 times the thickness of the second tape (56), and is in particular comprised between 0.5 times and 1 time the thickness of the second tape (56).

5. The pipe (10) according to any one of claims 2 to 4, **characterized in that** each wing (42) protrudes from an inner end of the first blank (60) and the second blank (62), respectively, the helical insert (28) including a first curved connecting segment (54) connecting the first blank (60) to a wing (42) and a second curved connecting segment (54) connecting the second blank (62) to a wing (42), each connecting segment (54) having a bending radius advantageously greater than 0.5 times the thickness of the second tape (56).

6. The pipe (10) according to any one of the preceding claims, **characterized in that** the rod (50) has a radial expanse greater than three times the thickness of the first tape (31).

7. The pipe (10) according to any one of the preceding claims, **characterized in that** the inner carcass (26) has a first axial play, the helical insert (28) having non-joined turns delimiting an axial play between them greater than the first axial play.

8. The pipe (10) according to any one of the preceding claims, **characterized in that** the inner carcass (26) has a first axial play, the rod (50) having a half-axial play at the average pitch in the helical interstice (40) greater than 0.25 times the first axial play.

9. The pipe (10) according to any one of the preceding claims, **characterized in that** the insert (28) defines at least one fluid passage pipe (120) connecting the interstice (40) to the circulation passage (16).

10. A method for manufacturing a flexible pipe (10), comprising the following steps:
- forming an inner carcass (26), the inner carcass (26) comprising a first bent tape (31) defining a helical interstice (40) emerging toward the central axis (A-A');
- producing an inner polymer sheath (20) defining a fluid circulation path (16) with a central axis (A-A'), the inner carcass (26) being positioned in the inner sheath (20);
- arranging at least one layer of the outer armors (24, 25) outside the inner sheath (20);
the method including placing a helical insert (28) with a T-shaped cross-section comprising a rod (50) inserted in the helical interstice (40) and two wings (52) protruding on either side of the rod (50) to inwardly close off the helical interstice (40),
**characterized in that** the helical insert (28) is formed by bending a second tape (56).

11. The method according to claim 10, **characterized in that** it includes the passage of the second tape (56) in an insert profiler (80) to form an insert profile (87) with a T-shaped cross-section and the winding of the insert profile (87) around a mandrel (72), the method including the passage of the first tape (31) in a carcass profiler (76) to form a carcass profile (85) and the winding of the carcass profile (85) around the insert profile (87) on the mandrel (72).

12. The method according to claim 11, **characterized in that** the insert profiler (80) and the carcass profiler (76) are positioned on either side of the mandrel (72), the insert profile (87) being brought onto the mandrel (72) opposite the carcass profile (85).

13. The method according to any one of claims 11 to 12, **characterized in that** it includes a step for closing the carcass profile (85) after its winding around the insert profile (87).

14. The method according to any one of claims 11 to 13, **characterized in that** the passage of the second tape (56) in the insert profiler (80) includes bending the second tape (56) along the central axis (D-D') to form the rod (50) and bending the tape (56) along two intermediate axes (E-E'; F-F') parallel to the central axis (D-D') to form the wings (52).

15. The method according to any one of claims 11 to 14, **characterized in that** the insert profile (28) is pushed on the mandrel (72) after its passage in the insert profiler (80).
